# EUROPÄISCHE PATENTANMELDUNG

(11) **EP 1 746 436 A2**
(43) Veröffentlichungstag der Anmeldung: **24.01.2007**
(21) Anmeldenummer: 06114836.7
(22) Anmeldetag: 01.06.2006
(51) Int. Cl.: G01S 13/56, G01S 7/40, G01S 13/86

(54) **Bewegungsmelder**

(30) Priorität: 21.07.2005 DE 102005034048
(71) Anmelder: ROBERT BOSCH GMBH, 70442 Stuttgart (DE)
(72) Erfinder: Schoebel, Joerg, 38226 Salzgitter (DE)

(57) **Zusammenfassung**

Der Bewegungsmelder zum Erfassen eines sich bewegenden Objekts innerhalb eines Richtungsbereichs weist einen winkelauflösenden Radarsensor zum Erfassen einer Bewegung des Objekts und zum Bestimmen einer Richtung zu dem Objekt auf. Zudem ist ein einstellbarer Diskriminator zum Entscheiden, ob die Richtung innerhalb des Richtungsbereichs liegt, sowie eine Einstelleinrichtung zum Einstellen des Richtungsbereichs vorgesehen.

## Beschreibung

### Stand der Technik

Die vorliegende Erfindung schafft einen Bewegungsmelder, insbesondere einen Bewegungsmelder zum Erfassen eines Objekts innerhalb eines Belichtungsbereichs.

Obwohl nachfolgend die der Erfindung zugrunde liegende Problematik anhand eines Bewegungsmelders mit einem kombinierten Radar-Infrarotsensor beschrieben wird, ist die vorliegende Erfindung nicht darauf beschränkt, sondern betrifft allgemein Bewegungsmelder.

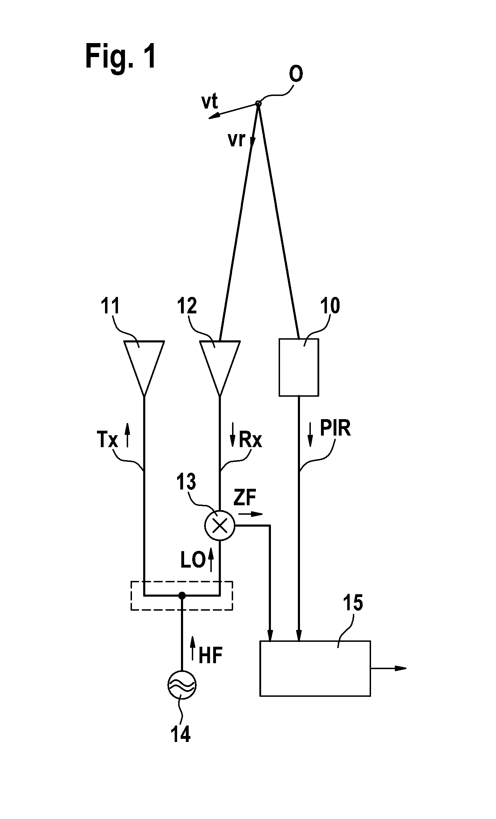

Bewegungsmelder werden in vielfältiger Weise zur Detektion von Personen, z.B. in Alarmanlagen oder für automatische Türöffner eingesetzt. In Fig. 1 ist ein schematisches Blockdiagramm eines Bewegungssensors dargestellt, welcher eine Kombination eines Radarsensors und eines Infrarotsensors verwendet.

Die Radarsensoreinrichtung weist eine Sendeantenne zum Emittieren eines ausgehenden Hochfrequenzsignals Tx basierend auf einem Hochfrequenzsignal HF eines Lokaloszillators auf. Im einfachsten Fall ist der Radarsensor als Mikrowellen-Dopplersensor aufgebaut, in dem das Hochfrequenzsignal nicht moduliert wird. Damit kann keine Entfernungsbestimmung vorgenommen werden. Es ist aber auch möglich, das Hochfrequenzsignal zu modulieren, z.B. durch eine Frequenzmodulation, und damit auch eine Abstandsinformation zu erhalten. Die emittierten Hochfrequenzsignale werden an einer Person O gestreut bzw. reflektiert. Dabei erfährt das reflektierte Signal in Abhängigkeit von der radialen Geschwindigkeit vᵣ in Richtung zu der Sendeantenne 11 eine Frequenzverschiebung gemäß dem Dopplereffekt. Eine Empfangsantenne 12 detektiert das reflektierte Hochfrequenzsignal und führt es einem Mischer 13 zusammen mit dem Hochfrequenzsignal LO des Lokaloszillators zu. Ein Tiefpasssignal ZF des Mischers 13 weist ein Signal auf, welches repräsentativ für die Frequenzverschiebung ist. Gibt das Signal eine Frequenzverschiebung ungleich Null an, so wird dies als durch ein vor dem Detektor sich bewegendes Objekt, z.B. eine sich näherende Person, verursacht identifiziert. Die Radarsensoreinrichtung ist besonders sensitiv auf eine auf die Antennen zu oder von ihnen weg gerichtete Bewegung, kann jedoch auch eine zu ihnen parallele Bewegung mit einer Geschwindigkeit vₜ erfassen.

Die maximale Detektionsreichweite des Radarsensors kann über eine Einstellelement festgelegt werden. Einerseits kann dazu ein moduliertes Hochfrequenzsignal verwendet werden, um damit den Abstand zum Zielobjekt zu ermitteln. Diese Abstandsinformation wird in einem Diskriminator mit der voreingestellten Detektionsreichweite verglichen und ein Alarm wird nur dann ausgelöst, wenn die voreingestellte Detektionsreichweite vom Objektabstand unterschritten wird.
Andererseits kann der Verstärkungsfaktor von Verstärkern in den Hochfrequenz- (Rx) und/oder Tiefpass- (ZF) Pfaden durch das Einstellelement vorgegeben werden. Da die Signalamplitude entfernungsabhängig ist und unterhalb einer bestimmten Signalamplitude das Objekt nicht mehr detektiert wird, kann damit ebenfalls die Detektionsreichweite vorgegeben werden, insbesondere wenn keine Modulation des Hochfrequenzsignals verwendet wird.

Parallel zu der Radareinrichtung wird ein Infrarotsensor 10 verwendet. Der Infrarotsensor 10 ist sensitiv auf eine Änderung der Wärmestrahlung einer Person. Vor dem Infrarotsensor sind Linsen und/oder Spiegel angeordnet, welche periodisch Winkelbereiche des Beobachtungsbereichs auf den Infrarotsensor abbilden bzw. nicht abbilden. Somit ergibt sich bei einer sich vor dem Infrarotsensor bewegenden Person eine periodisch sich ändernde, auf den Infrarotsensor abgebildete Wärmestrahlung, welche der Infrarotsensor somit erfassen kann. Aufgrund dieses Funktionsprinzips erfassen Infrarotsensoren bevorzugt Personen, welche sich tangential zu dem Sensor mit einer Geschwindigkeit vₜ bewegen.

In einer Datenverarbeitungseinrichtung werden die Signale PIR des Infrarotsensors 10 und ZF der Radareinrichtung zusammengeführt. Dabei werden die beiden Signale auf Konsistenz geprüft, wobei die unterschiedlichen Vorzüge der sensitiven Elemente entsprechend der radialen und tangentialen Bewegung berücksichtigt werden.

Bei einer Einrichtung des in Zusammenhang mit Fig. 1 beschriebenen Bewegungsmelders ist gewünscht, dass nur ein vorgegebener Bereich von dem Bewegungsmelder erfasst wird. Personen oder Objekte außerhalb dieses Bereichs sollen zu keiner Auslösung eines Alarms führen. Eine Beschränkung der Reichweite des Erfassungsbereichs ist durch eine Abschwächung der Empfmdlichkeit der beiden Sensoren möglich. Eine Einschränkung der Richtung wird durch Kunststoffabdeckungen vor dem Infrarotsensor 10 erreicht. Dabei sind die Kunststoffabdeckungen so anzubringen, dass sie einen gesamten Winkelbereich abdecken, welcher wie zuvor beschrieben durch die Linsen und Spiegel definiert wird. Dadurch ergibt sich typischerweise nur eine sehr grobe Einstellmöglichkeit der Beobachtungsrichtung von 5° bis 10°. Zudem ist meist ein iteratives Ausprobieren erforderlich, bis eine geeignete Konfiguration der Abdeckung erreicht wird. Die dafür notwendigen Anpassungen der Abdeckung führen zu einem erheblichen Aufwand bei der Einrichtung des Bewegungsmelders.

Die vorliegende Erfindung stellt einen Bewegungsmelder bereit, dessen Erfassungsbereich, insbesondere dessen Richtungsbereich, einfach einstellbar ist.

### Vorteile der Erfindung

Die Erfindung schafft ein Verfahren mit den Merkmalen des Patentanspruchs 1, welches eine vereinfachte Einstellung eines Richtungsbereiches ermöglicht, in welchem ein Objekt erfasst werden soll.

Der erfindungsgemäße Bewegungsmelder zum Erfassen eines sich bewegenden Objekts innerhalb eines Richtungsbereichs weist einen winkelauflösenden Radarsensor zum Erfassen einer Bewegung des Objekts und zum Bestimmen einer Richtung zu dem Objekt auf. Zudem ist ein einstellbarer Diskriminator zum Entscheiden vorgesehen, ob die Richtung innerhalb des Richtungsbereichs liegt. Ferner ist eine Einstelleinrichtung zum Voreinstellen des Richtungsbereichs vorgesehen.

Eine wesentliche Idee der vorliegenden Erfindung besteht darin, einen winkelauflösenden Radarsensor zu verwenden. Dessen Winkelauflösung kann in einfacher Weise benutzt werden, die Richtung des Objekts zu bestimmen und mit Hilfe des Diskriminators zu entscheiden, ob sich das Objekt innerhalb oder außerhalb des Richtungsbereichs befindet. Eine Anpassung von extern angebrachten Blenden oder Abschattungen kann auf diese Weise entfallen.

In den Unteransprüchen finden sich vorteilhafte Weiterbildungen und Verbesserungen des in Patentanspruch 1 angegebenen Bewegungsmelders.

Eine besonders bevorzugte Weiterbildung sieht vor, dass die Einstelleinrichtung Markierungen aufweist, welche an einem Gehäuse des Bewegungsmelders derart angeordnet sind, dass eine Peilung entlang der Markierungen den Richtungsbereich anzeigt.

Gemäß einer Weiterbildung weist der Bewegungsmelder einen Infrarotsensor auf, dessen Detektionsreichweite mit einer zweiten Einstelleinrichtung einstellbar ist.

Gemäß einer Ausführungsform weist der winkelauflösende Radarsensor einen winkelauflösenden Mikrowellenradarsensor oder einen winkelauflösenden Echowellenradarsensor auf. In einer Ausgestaltung ist der Radarsensor mit einer digitalen oder einer analogen Strahlformung eingerichtet.

Eine Ausgestaltung sieht vor, dass der Radarsensor einen IQ-Mischer zum Mischen eines von dem Radarsensor empfangenen reflektierten Signals mit einem Signal eines Lokaloszillators zum Unterscheiden von zwei zu einer Symmetrieachse einer Antennenanordnung symmetrischen Richtungen aufweist. Dabei kann der Richtungsbereich einen ersten und einen zweiten Schwellwert aufweisen, welche eine Einstellung des Richtungsbereichs ermöglichen, welche bezüglich der Symmetrieachse der Antennenanordnung asymmetrisch ist.

Gemäß einer Ausgestaltung weist der Radarsensor einen einstufigen Mischer zum Mischen eines empfangenen reflektierten Signals mit einem Signal eines Lokaloszillators auf.

Gemäß einer besonders bevorzugten Weiterbildung ist eine erste Signaleinrichtung vorgesehen, welche angibt, ob sich das Objekt innerhalb des Richtungsbereichs befindet und eine zweite Signaleinrichtung zum Signalisieren, dass sich das Objekt innerhalb einer vorgegebenen Entfernung befindet. Dies ermöglicht eine einfache Einstellung des Bewegungsmelders, da die weiteren Einstellparameter, wie z.B. die der Empfindlichkeit oder der maximalen Entfernung des Objekts zu dem Bewegungsmelder, in ein angezeigtes Signal einfließen, dass vom Richtungsbereich unabhängig ist.

Ausführungsbeispiele der Erfindung sowie vorteilhafte Weiterbildungen sind in den Figuren der Zeichnungen schematisch dargestellt und in der nachfolgenden Beschreibung näher erläutert.

In den Figuren zeigen:
- Fig. 1: einen allgemein bekannten kombinierten Infrarot-Radarbewegungsmelder;
- Fig. 2: eine erste Ausführungsform der vorliegenden Erfindung;
- Fig. 3: einen Ausschnitt einer Antenneneinrichtung einer zweiten Ausführungsform der vorliegenden Erfmdung;
- Fig. 4: einen Ausschnitt einer Antenneneinrichtung einer weiteren Ausfühnmgsform der vorliegenden Erfmdung;
- Fig. 5: ein Blockdiagramm zur Erläuterung einer analogen Strahlformung für eine Ausführungsform der vorliegenden Erfindung;
- Fig. 6: ein Blockdiagramm zur Erläuterung einer digitalen Strahlformung bei einer Ausführungsform der vorliegenden Erfindung;
- Fig. 7: eine Aufsicht auf ein Gehäuse der vorliegenden Erfindung;
- Fig. 8: eine perspektivische Darstellung einer Ausführungsform der vorliegenden Erfindung; und
- Fig. 9: eine perspektivische Darstellung einer Ausführungsform der vorliegenden Erfindung.

### Beschreibung der Ausführungsbeispiele

In den Figuren bezeichnen gleiche Bezugszeichen gleiche oder funktionsgleiche Komponenten, soweit nichts Gegenteiliges angegeben ist.

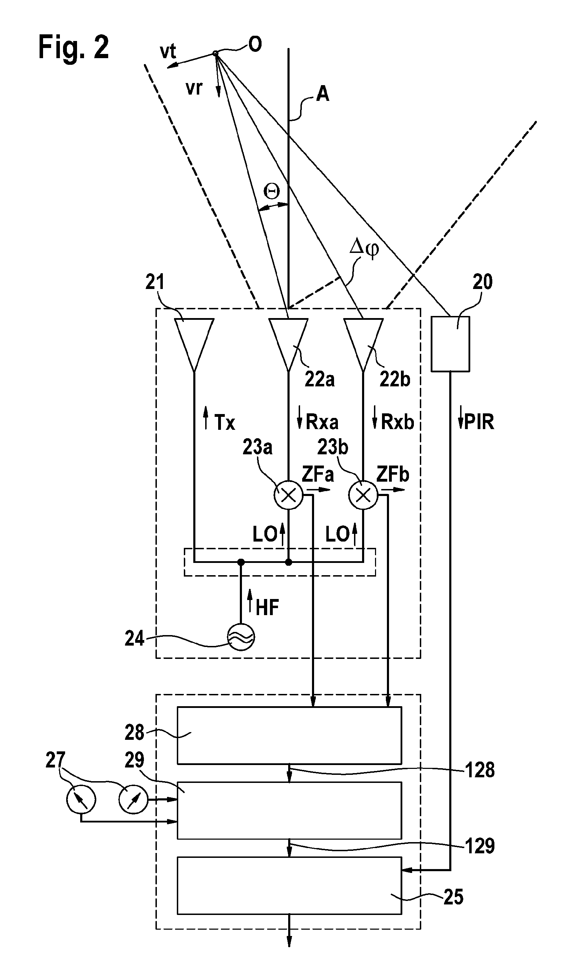

In Fig. 2 ist ein Blockdiagramm einer Ausführungsform der vorliegenden Erfmdung dargestellt. Ein Infrarotsensor 20 erfasst die Wärmestrahlung eines Objektes O. Durch Linsen und/oder Spiegel, welche sich vor einer Detektionsfläche des Infrarotsensors 20 befinden, wird der Erfassungsbereich des Infrarotsensors 20 periodisch in Winkelbereiche unterteilt, aus denen die Wärmestrahlung auf die Detektionsfläche abgebildet bzw. nicht abgebildet wird. Dadurch ergibt sich durch eine sich längs des Infrarotsensors 20 bewegende Person O ein periodisch auf die Detektionsfläche des Infrarotsensors 20 fallendes Wärmesignal. Dieses periodische Wärmesignal wird von dem Detektor in ein elektrisches Signal PIR umgewandelt.

Eine Radareinrichtung weist einen lokalen Oszillator 24 auf, dessen Hochfrequenzsignal in ein zu sendendes Radiosignal Tx umgewandelt wird. Diese Umwandlung kann einerseits eine Verstärkung und/oder eine Modulation, z.B. eine Frequenzmodulation, FMCW-Modulation beinhalten. Das zu sendende Radiosignal Tx wird von einer Sendeantenne 21 emittiert. Das Radiosignal wird zum Teil an dem Objekt O gestreut bzw. reflektiert. Die reflektierten Anteile werden von Empfangsantennen 22a, 22b registriert und in empfangene Radiosignale Rxa, Rxb umgewandelt. Bewegt sich das Objekt O auf die Sendeantenne 21 zu, erfahren die reflektierten Radiowellen eine Frequenzverschiebung gemäß dem Dopplereffekt. Diese Frequenzverschiebung erhöht sich mit der Geschwindigkeit des Objekts. Es kann jedoch auch vereinfachend ausgenützt werden, dass die bloße Existenz einer Frequenzverschiebung auf ein sich bewegendes Objekts O hinweist. Die empfangenen Radiosignale Rxa, Rxb werden zwei entsprechenden Mischern 23a, 23b zugeführt, an deren zweiten Eingang ein dem gesendeten Radiosignal Tx entsprechendes Hochfrequenzsignal LO angelegt wird. Die auf dieses Weise abwärts gewandelten Tiefpasssignale ZFa, ZFb weisen eine Frequenz auf, welche der Dopplerverschiebung des Radiosignals entspricht. Ein Tiefpasssignal ZFa, ZFb mit einer Frequenz ungleich null weist somit auf ein sich bewegendes Objekt O hin.

Die Richtung eines Objekts hin zu den Empfangsantennen 22a, 22b ist durch den Winkel θ angegeben, welcher bezüglich einer Symmetrieachse A der Antennenanordnung 22a, 22b definiert ist. Ist der Winkel θ ungleich null, ergibt sich ein Laufzeitunterschied Δϕ zwischen zwei reflektierten Radiowellen, bevor sie von den entsprechenden Empfangsantennen 22a, 22b detektiert werden. Dieser Laufzeitunterschied lässt sich in bekannter Weise dem Winkel θ zuordnen. Der Laufzeitunterschied Δϕ führt zu einem Phasenunterschied in den empfangenen Radiosignalen Rxa, Rxb bzw. in den Tiefpasssignalen ZFa, ZFb. Die Tiefpasssignale werden einer Richtungsbestimmungseinrichtung 28 zugeführt, welche aus dem Phasenunterschied den Winkel Θ bestimmt.

Der durch die Richtungsbestimmungseinrichtung 28 bestimmte Winkel bzw. die Richtung wird an eine Diskriminatoreinrichtung 29 übermittelt. Diese Diskriminatoreinrichtung 29 vergleicht die Richtung mit einem voreingestellten Wertebereich und gibt ein entsprechendes Signal aus, ob eine Richtung innerhalb dieses Wertebereichs liegt oder nicht. Die Voreinstellung des Wertebereichs erfolgt durch einen Benutzer über eine Einstelleinrichtung 27. Die Einstelleinrichtung kann Bedienelemente aufweisen, welche unmittelbar an dem Bewegungsmelder angebracht sind. Eine weitere Möglichkeit besteht darin, eine Schnittstelle bereitzustellen, welche eine Fernsteuerung ermöglicht. Letzteres schafft die Möglichkeit, einen Verbund von Bewegungsmeldern durch eine zentrale Steuerung zusammenzuschalten. Das diskriminierte Signal 129 der Diskriminatoreinrichtung 29 wird an eine Datenverarbeitungseinrichtung 25 weitergeleitet. Zusätzlich können weitere Sensoren, wie z.B. ein Infrarotsensor 20, ein Detektionssignal PIR dieser Datenverarbeitungseinrichtung 25 zuführen. Die Datenverarbeitungseinrichtung 25 entscheidet anhand des Diskriminationssignals und der weiteren Signale, ob ein Alarm auszulösen ist. Vorzugsweise wird kein Alarm ausgelöst, wenn das Diskriminationssignal 129 angibt, dass sich eine bewegende Person O außerhalb des zu überwachenden Bereiches befmdet, welcher durch die Einstelleinrichtung 27 vorgegeben ist.

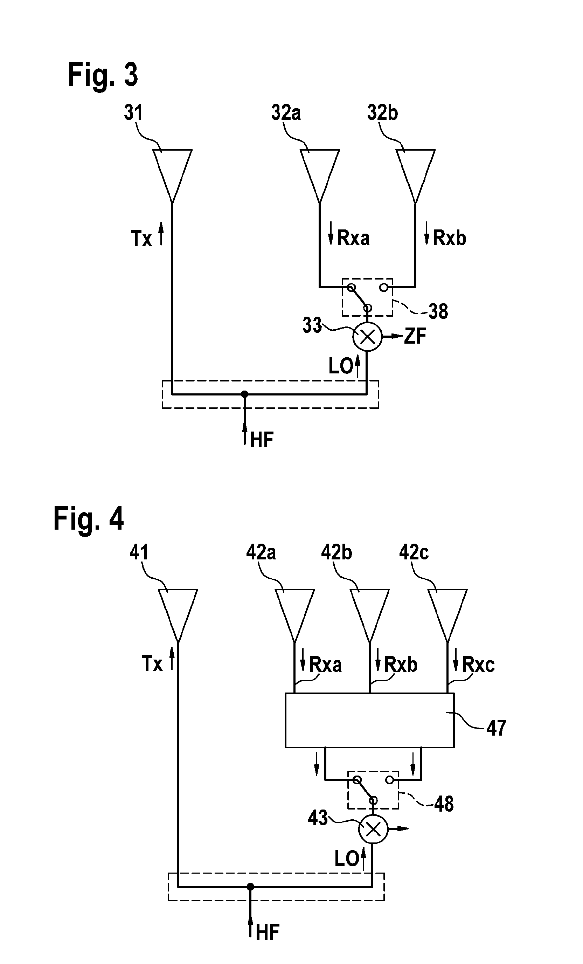

In Fig. 3 ist im Detail eine mögliche Ausführungsform einer Radareinrichtung dargestellt. Hierbei wird vorteilhafterweise nur eine Mischereinrichtung 33 zum Mischen der empfangenen Radarsignale mit dem Signal des lokalen Oszillators LO verwendet. Hierfür ist in den Pfad zwischen den Empfangsantennen 32a, 32b und dem Mischer 33 eine Schalteinrichtung 38 angeordnet. Diese Schalteinrichtung 38 leitet abwechselnd die in beiden empfangenen Radarsignale an den Mischer 33 weiter. Zusätzlich zu der Schalteinrichtung kann eine Strahlformungseinrichtung 47 bestehend beispielsweise aus einer dielektrischen oder planaren Linse, einer Butler- oder Blass-Matrix oder aus einer Kombination aus Leistungsteilern und Phasenscheibern zwischen den Empfangsantennen 42a, 42b, 42c und dem Mischer 43 angeordnet sein (Fig. 4). Auch in dieser Anordnung kann wieder eine Schalteinrichtung 48 zur abwechselnden Weiterleitung der empfangenen Radarsignale an den Mischer eingesetzt werden.

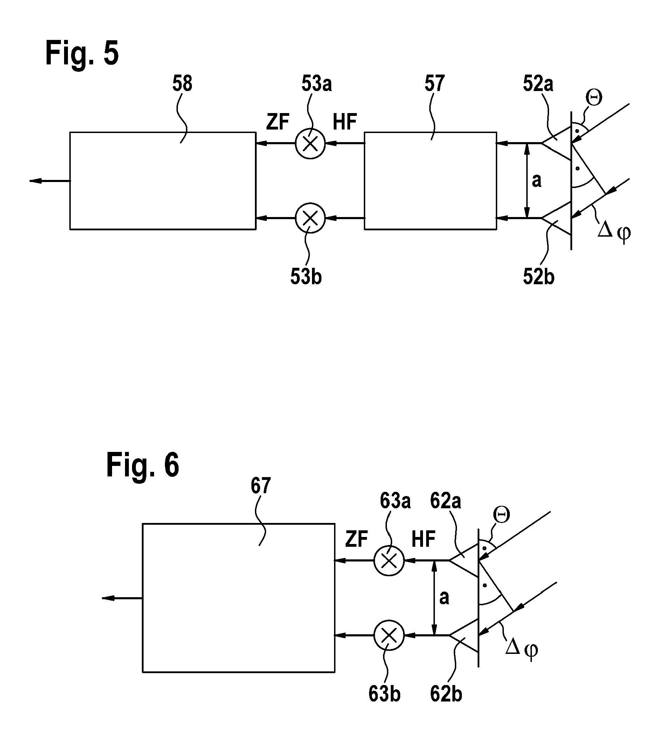

Fig. 5 stellt in einem Blockdiagramm eine Empfangsantenneneinrichtung für eine Ausführungsform der vorliegenden Erfindung vor, welche auf einer analogen Strahlformung basiert. Bei einer analogen Strahlformung sind die Empfangsantennen 52a, 52b in verschiedene Richtungen ausgerichtet bzw. werden über ein strahlformendes Element 57 angesteuert (Butler-Matrix, Rotman-Linse, Leistungsteiler und/oder Phasenschieber usw.). Aus einem Vergleich der Intensität der empfangenen Radiosignale wird die Richtung Θ eines Objekts zu der Antennenanordnung durch eine entsprechende Auswertungseinrichtung 58 bestimmt. Das auf diese Weise bestimmte Richtungssignal wird einer einstellbaren Diskriminatoreinrichtung zugeführt.

Bei der digitalen Strahlformung (Fig. 6) sind üblicherweise alle Empfangsantennen 62a, 62b identisch ausgestaltet. Deren Empfangssignale werden mittels Mischern 63a, 63b in ein niederfrequentes Tiefpasssignal ZF umgewandelt. Dabei sind die zweiten Eingänge der Mischer 63a, 63b mit demselben Lokaloszillator verbunden. Aus den Phasenunterschieden der Tiefpasssignale bestimmt eine digitale Strahlformungseinrichtung 67 die Empfangsrichtung Θ.

Standardmäßige einstufige Mischer erzeugen die Differenzfrequenz zwischen dem empfangenen Radiosignal Rxa und dem Lokaloszillator LO. Ein Vorzeichen der Differenzfrequenz und damit des Phasenunterschieds ist nicht definiert. Aus dem Betrag des Phasenunterschieds kann, wie zuvor bereits ausgeführt, der Winkel Θ der Empfangsrichtung bestimmt werden. Jedoch ist aufgrund des fehlenden definierten Vorzeichens des Phasenunterschieds nicht möglich, das Vorzeichen des Winkels Θ zu bestimmen, d.h. symmetrisch zu einer Symmetrieachse A der Empfangseinrichtung angeordnete Objekte lassen sich nicht unterscheiden. Ein sinnvoll einstellbarer Überwachungsbereich ist daher symmetrisch zu einer Symmetrieachse A der Antennenanordnung. Vorteilhafterweise ist die Antennenanordnung oder der gesamte Bewegungsmelder zur Ausrichtung der Symmetrieachse A mechanisch schwenkbar.

Durch die Verwendung von zweistufigen, so genannten IQ-Mischern, ist es möglich, ein fest definiertes Vorzeichen eines Phasenunterschieds des lokalen Oszillators und eines empfangenen Radiosignals zu bestimmen. Ein Einsatz der IQ-Mischer ermöglicht somit eine Unterscheidung symmetrisch zu der Symmetrieachse A befindlicher, sich bewegender Objekte O. Dies ermöglicht eine Einstellung eines Richtungsbereichs, welcher asymmetrisch zu der Symmetrieachse A der Antennenanordnung ist.

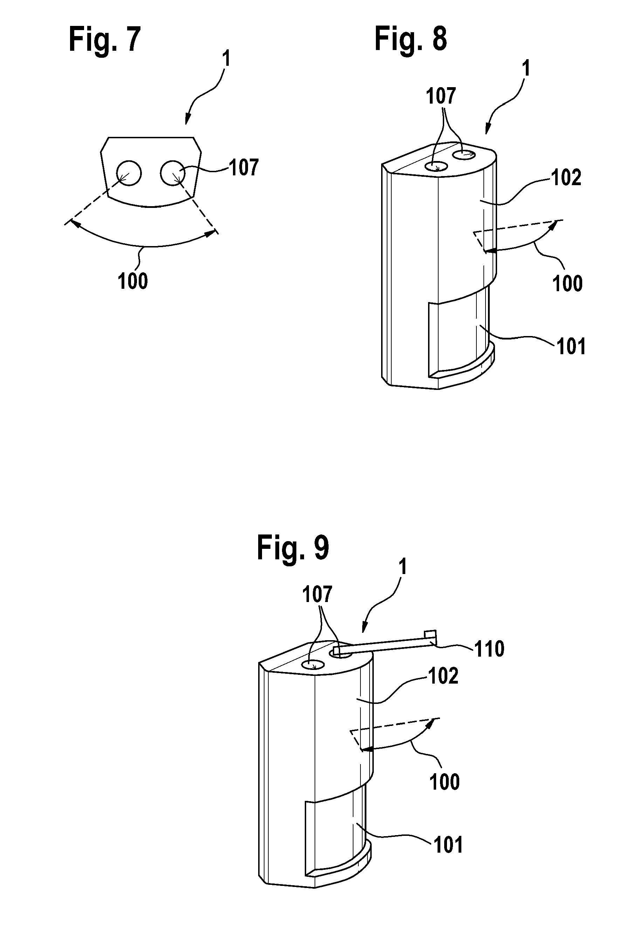

In den Fig. 7 und 8 ist ein Bewegungsmelder in einer Aufsicht- bzw. einer perspektivischen Ansicht dargestellt. In einem Gehäuse 102 ist ein kombinierter Infrarot - Radarsensor nach einem der vorhergehenden Ausführungsbeispiele angeordnet. Das Gehäuse 102 weist ein im infraroten Spektralbereich transparentes Fenster auf. Zwei Einstelleinrichtungen 107 sind auf einer Stirnfläche des Gehäuses 102 angeordnet. Die Einstelleinrichtungen 107 weisen jeweils eine um eine Achse drehbare Scheibe oder einen Zeiger auf. Die Achse ist dabei senkrecht zu dem einstellbaren Azimutalwinkelbereich 100 des Radarsensors. Vorteilhafterweise weist der Zeiger oder eine Markierung auf der Scheibe in eine den Azimutalwinkelbereich 100 begrenzende Richtung. Dies kann einerseits dadurch realisiert werden, dass der Zeiger bzw. die Scheibe durch einen Motor nachgedreht werden. In einer weiteren Variante wird ein Verdrehen des Zeigers bzw. der Scheibe durch einen Benutzer von einem Sensor erfasst und der Winkelbereich 100 entsprechend angepasst. Die Erfassung kann rein elektromechanisch, z.B. mit einem Drehpotentiometer, oder opto-mechanisch, z.B. mit einem optischen Drehimpulsgeber, erfolgen. Fig. 9 zeigt Aufsätze 110, welche zur Vereinfachung der Peilung des Winkelbereichs 100 auf die Einstelleinrichtung 107 aufgesetzt werden können. Dabei geben diese gleich den Zeigern bzw. Markierungen die begrenzenden Richtungen des Azimutalwinkelbereichs 100 an.

Der Bewegungsmelder kann mit einer Schnittstelle zur Übertragung eines Azimutalwinkelbereichs 100 eingerichtet sein. Die Schnittstelle ist eingangsseitig mit einer Steuerungseinrichtung verbunden, welche den Azimutalwinkelbereich einstellt. Dies ist insbesondere bei Räumlichkeiten mit einer Vielzahl an Bewegungsmeldern von Interesse. So kann der Abdeckungsbereich der Bewegungsmelder untereinander optimiert werden. Zudem lassen sich auch verschiedene Erfassungsbereiche zu verschiedenen Zeiten, z.B. tagsüber, nachts, festlegen und automatisiert steuern.

Obgleich die vorliegende Erfindung vorstehend anhand eines bevorzugten Ausführungsbeispiels beschrieben wurde, ist sie nicht darauf beschränkt, sondern auf vielfältige Art und Weise modifizierbar.

Insbesondere kann anstelle einer Radareinrichtung auch eine Echoeinrichtung mit einer Winkelauflösung verwendet werden. Da sich die physikalisch technischen Grundlagen der beiden Einrichtungen nur geringfügig unterscheiden ist eine Adaption der Mischer, der Strahlformungseinrichtung und der Antennen als innerhalb der Fähigkeiten eines Fachmanns anzusehen.

## Patentansprüche

1. Bewegungsmelder zum Erfassen eines sich bewegenden Objekts innerhalb eines Richtungsbereiches, mit
einer winkelauflösenden Radar-Sensoreinrichtung zum Erfassen des Objekts und Bestimmen einer Richtung zu dem Objekt;
einem einstellbaren Diskriminator zum Entscheiden, ob die Richtung innerhalb des Richtungsbereichs liegt; und
einer Einstelleinrichtung zum Voreinstellen des Richtungsbereichs.

2. Bewegungsmelder nach Anspruch 1, **dadurch gekennzeichnet, dass** die Einstelleinrichtung Markierungen aufweist, welche an einem Gehäuse der Bewegungsmelder derart angeordnet sind, dass eine Peilung entlang der Markierung den vorgegebenen Richtungsbereich anzeigt.

3. Bewegungsmelder nach einem der vorhergehenden Ansprüche, **dadurch gekennzeichnet, dass** der Bewegungsmelder eine Infrarotsensoreinrichtung aufweist, welcher eine vorgegebene Detektionsreichweite aufweist, und eine Einstelleinrichtung zum Einstellen der Detektionsreichweite.

4. Bewegungsmelder nach einem der vorhergehenden Ansprüche, **dadurch gekennzeichnet, dass** die winkelauflösende Radar-Sensoreinrichtung einen MikrowellenRadarsensor oder einen Echowellen-Radarsensor beinhaltet.

5. Bewegungsmelder nach Anspruch 4, **dadurch gekennzeichnet, dass** die Detektionsreichweite der winkelauflösenden Radar-Sensoreinrichtung einstellbar ist.

6. Bewegungsmelder nach Anspruch 4 oder 5, **dadurch gekennzeichnet, dass** die Radarsensoreinrichtung mit einer digitalen oder eine analogen Strahlformungseinrichtung eingerichtet ist.

7. Bewegungsmelder nach Anspruch 4, 5 oder 6, **dadurch gekennzeichnet, dass** die Radarsensoreinrichtung einen IQ-Mischer zum Mischen eines empfangenen reflektierten Signals mit einem Signal eines Lokaloszillators aufweist, damit zwei Richtungen symmetrisch zu einer Symmetrieachse einer Antennenanordnung unterscheidbar sind.

8. Bewegungsmelder nach Anspruch 7, **dadurch gekennzeichnet, dass** der vorbestimmte Richtungsbereich einen ersten und einen zweiten Schwellwert aufweist, welche einen bezüglich der Symmetrieachse der Antennenanordnung asymmetrischen Richtungsbereich vorgeben.

9. Bewegungsmelder nach Anspruch 4, 5 oder 6, **dadurch gekennzeichnet, dass** die Radarsensoreinrichtung einen einstufigen Mischer zum Mischen eines empfangenen reflektierten Signals mit einem Signal eines Lokaloszillators aufweist.

10. Bewegungsmelder nach einem der vorhergehenden Ansprüche, **gekennzeichnet durch** eine erste Signaleinrichtung zum Signalisieren, dass sich ein Objekt in dem vorgegebenen Richtungsbereich befindet und eine zweite Signaleinrichtung zum Signalisieren, dass sich das Objekt einer vorgegebenen Entfernung befindet.

11. Bewegungsmelder nach einem der vorhergehenden Ansprüche, **gekennzeichnet durch** eine Schnittstelle über welche der Richtungs- und/oder Entfernungsbereich einstellbar ist.

12. Bewegungsmelderanordnung mit mindestens zwei Bewegungsmelder nach Anspruch 12, wobei eine zentrale Steuerungseinheit den ersten Richtungs- und/oder Entfernungsbereich eines ersten Bewegungsmelder über die Schnittstelle derart anpasst, dass der erste Richtungsbereich nur in einem Randbereich mit einem zweiten Richtungsbereich eines zweiten Bewegungsmelders überlappt.

13. Bewegungsmelderanordnung nach Anspruch 11, wobei eine zentrale Steuerungseinheit gesteuert von einer Bedienereinheit und/oder tageszeit- und/oder wochentags-spezifisch den Richtungs- und/oder Entfernungsbereich eines Bewegungsmelders über die Schnittstelle anpasst.
